# FASCICULE DE BREVET EUROPEEN

(11) **EP 2 874 334 B1**
(45) Date de publication et mention de la délivrance du brevet: **08.06.2016**
(21) Numéro de dépôt: 14193583.3
(22) Date de dépôt: 18.11.2014
(51) Int. Cl.: H04B 10/80, H04B 10/27, G02B 6/43

(54) **Réseau optique et système de traitement de données comportant un tel réseau optique**
Optisches Netz und Datenverarbeitungssystem, das ein solches optisches Netz umfasst
Optical network and data processing system comprising such an optical network

(30) Priorité: 19.11.2013 FR 1361349
(43) Date de publication de la demande: 20.05.2015
(73) Titulaire: Commissariat à l'Énergie Atomique et aux Énergies Alternatives, 75015 Paris (FR)
(72) Inventeur: Thonnart, Yvain, 38100 Grenoble (FR)
(74) Mandataire: Bonnet, Michel

(56) Documents cités:
- WO-A1-2009/154592
- SEBASTIEN LE BEUX ET AL: "Optical Ring Network-on-Chip (ORNoC): Architecture and design methodology", DESIGN, AUTOMATION&TEST IN EUROPE CONFERENCE&EXHIBITION (DATE), 2011, IEEE, 14 mars 2011 (2011-03-14), pages 1-6, XP031863697, ISBN: 978-1-61284-208-0
- PRADHEEP KHANNA KALIRAJ ET AL: "Performance evaluation of reliability aware photonic Network-on-Chip architectures", GREEN COMPUTING CONFERENCE (IGCC), 2012 INTERNATIONAL, IEEE, 4 juin 2012 (2012-06-04), pages 1-6, XP032261888, DOI: 10.1109/IGCC.2012.6322277 ISBN: 978-1-4673-2155-6
- YU-HSIANG KAO ET AL: "BLOCON: A Bufferless Photonic Clos network-on-chip architecture", NETWORKS ON CHIP (NOCS), 2011 FIFTH IEEE/ACM INTERNATIONAL SYMPOSIUM ON, IEEE, 1 mai 2011 (2011-05-01), pages 81-88, XP032003148,
- GEHLOT P ET AL: "Performance evaluation of Network on Chip architectures", EMERGING TRENDS IN ELECTRONIC AND PHOTONIC DEVICES&SYSTEMS, 2009. ELECTRO '09. INTERNATIONAL CONFERENCE ON, IEEE, PISCATAWAY, NJ, USA, 22 décembre 2009 (2009-12-22), pages 124-127, XP032187965, DOI: 10.1109/ELECTRO.2009.5441156 ISBN: 978-1-4244-4846-3

## Description

La présente invention concerne un réseau optique et un système de traitement de données comportant un tel réseau optique.

L'invention s'applique plus particulièrement à un réseau optique destiné à permettre une communication de données entre des unités de traitement de données, comportant :
- un support,
- au moins un faisceau d'au moins un guide optique s'étendant sur le support,
- pour chaque faisceau, des interfaces entre le faisceau et respectivement les unités de traitement, chaque interface comportant une ou plusieurs unités de communication avec respectivement un ou plusieurs guides optiques du faisceau pour permettre à l'unité de traitement respective d'échanger des données avec ce ou ces guides optiques, chaque unité de communication pouvant être un lecteur et/ou un écrivain,
dans lequel le faisceau relie successivement les interfaces en boucle fermée orientée dans un certain sens de rotation,
et dans lequel les unités de communication de chaque interface sont transversalement rangées par rangs croissant depuis la périphérie jusqu'à l'intérieur du faisceau.

L'article intitulé « Photonic Networks-on-Chip for Future Generations of Chip Multiprocessors », de A. SHACHAM, K. BERGMAN, L.P. CARLONI, publié dans IEEE TRANSACTIONS ON COMPUTERS, volume 57, n° 9, en septembre 2008, décrit un réseau optique comportant des guides optiques reliant des interfaces selon une topologie maillée à deux dimensions dans laquelle les données suivent tout d'abord un chemin horizontal puis un chemin vertical jusqu'à leur lecteur. L'injection, le changement de direction et l'éjection via des routeurs optiques sont configurés par un réseau électrique de servitude.

Cette solution présente plusieurs inconvénients. D'une part, le grand nombre de croisements de guides optiques engendre des pertes importantes sur le signal optique transféré, qui doit être compensé par une augmentation de la puissance du laser alimentant les guides optiques, et donc de la consommation du système. D'autre part, la nécessité d'un réseau de servitude pour contrôler les routeurs optiques implique une logique électrique de contrôle répartie sur l'ensemble de la topologie, qui occupe une certaine surface et peut mener à des latences importantes de configuration.

L'article intitulé « Multi-Optical Network-on-Chip for Large Scale MPSoC », de S. LE BEUX, I. O'CONNOR et al., publié dans IEEE EMBEDDED SYSTEMS LETTERS, volume 2, n° 3, en septembre 2010, décrit un réseau optique « banian » comportant des guides optiques reliant des écrivains à des lecteurs au travers de routeurs. Les routeurs dévient une longueur d'onde spécifique en laissant passer les autres longueurs d'onde dans le même axe. Pour définir un chemin entre un écrivain et un lecteur, une matrice de connectivité détermine la longueur d'onde à sélectionner par chaque écrivain pour communiquer avec un lecteur donné.

Cette solution présente également plusieurs inconvénients. Les routeurs statiques en longueur d'onde ne nécessitent pas de logique de configuration dynamique, mais doivent être maintenus en résonance sur leur longueur d'onde spécifique, ce qui peut imposer une logique de contrôle sur l'ensemble de la topologie (par exemple en cas de dépendance des routeurs à la température). En outre, cette solution présente également un nombre non négligeable de croisements de guides optiques.

L'article intitulé « Optical Ring Network-on-Chip (ORNoC): Architecture and design methodology », de S. LE BEUX, I. O'CONNOR et al., publié en 2011, décrit un réseau optique comprenant, dans un guide optique, un faisceau lumineux présentant plusieurs longueurs d'onde. Chaque longueur d'onde constitue un canal de communication reliant un écrivain unique à un lecteur unique. Le guide optique est de forme circulaire, le faisceau lumineux passant en boucle fermée par des interfaces.

Cette solution présente cependant plusieurs inconvénients. Elle nécessite d'une part un grand nombre de canaux dans le guide optique, voire l'utilisation de plusieurs guides optiques multicanaux, pour assurer la connectivité complète de l'ensemble des écrivains à l'ensemble des lecteurs, ce qui se traduit par des coûts en surface et en complexité des interfaces. En outre, chaque interface susceptible d'être écrivain doit disposer d'au moins une source laser ce qui est particulièrement encombrant.

L'article intitulé « Corona: System Implications of Emerging Nanophotonic Technology », de D. VANTREASE, R.G. BEAUSOLEIL et al., publié par l'ISCA en juin 2008, et l'article intitulé « Firefly: Illuminating future network-on-chip with nanophotonics », de Y. PAN et al., publié par l'ISCA en 2009, décrivent chacun un réseau optique sensiblement similaire à celui de l'article de LE BEUX et al, si ce n'est que chaque guide optique relie plusieurs écrivains à un lecteur unique, ou un unique écrivain à plusieurs lecteurs.

Cette solution présente l'inconvénient de nécessiter des interfaces différentes.

Il peut ainsi être souhaité de prévoir un réseau optique qui permette de s'affranchir d'au moins une partie des problèmes et contraintes précités.

Il est donc proposé un réseau optique destiné à permettre une communication de données entre des unités de traitement de données, comportant :
- un support,
- au moins un faisceau de plusieurs guides optiques s'étendant sur le support,
- pour chaque faisceau, des interfaces entre le faisceau et respectivement les unités de traitement, chaque interface comportant une ou plusieurs unités de communication avec respectivement un ou plusieurs guides optiques du faisceau pour permettre à l'unité de traitement respective d'échanger des données avec ce ou ces guides optiques, chaque unité de communication pouvant être un lecteur et/ou un écrivain,
dans lequel le faisceau relie successivement les interfaces en boucle fermée orientée dans un certain sens de rotation de l'information,
dans lequel les unités de communication de chaque interface sont transversalement rangées par rangs croissant depuis la périphérie jusqu'à l'intérieur du faisceau,
dans lequel des premier et deuxième guides optiques partent d'interfaces différentes ou se terminent à des interfaces différentes,
dans lequel le premier guide optique relie deux unités de communication toutes les deux lecteurs et/ou écrivains et de rangs différents dans des première et deuxième interfaces respectives,
et dans lequel le deuxième guide optique passe par une unité de communication de la deuxième interface de rang inférieur à celui de l'unité de communication de cette deuxième interface par laquelle passe le premier guide optique.

Ainsi, les unités de communication reliées par un même guide optique ne sont plus obligatoirement au même rang et il est possible de choisir ce rang en fonction des interfaces souhaitées. En particulier, il est possible d'obtenir des interfaces homogènes, ce qui est utile lorsque les unités de traitement sont identiques. En outre, il est possible de limiter les croisements de guides optiques.

De façon optionnelle, pour chaque faisceau, au moins deux interfaces comportent un même nombre d'écrivains et de lecteurs, transversalement rangés de la même manière, et les écrivains sont tous placés à la périphérie du faisceau et les lecteurs placés à l'intérieur du faisceau, ou inversement.

De façon optionnelle également, chacun desdits plusieurs guides optiques du faisceau part ou finit : soit de/à l'unité de communication la plus périphérique d'une des interfaces avec le faisceau, soit de/à une autre unité de communication de l'interface, à la périphérie de laquelle ne se trouvent que des unités de communication d'où/où respectivement d'autres guides optiques partent ou finissent.

De façon optionnelle également, chacun d'au moins un guide optique relie, dans le sens de rotation de l'information, des unités de communication rangées de plus en plus proches de l'intérieur du faisceau dans leurs interfaces respectives, ou rangées de plus en plus proches de la périphérie du faisceau dans leurs interfaces respectives.

De façon optionnelle également, chacun desdits plusieurs guides optiques se termine ou part : soit à/de l'unité de communication la plus à l'intérieur d'une des interfaces, soit à/de une autre unité de communication de l'interface, à l'intérieur de laquelle ne se trouvent que des unités de communication où/d'où respectivement d'autres guides optiques se terminent ou partent.

De façon optionnelle également, les guides optiques de chaque faisceau s'étendent sur le support en forme de spirale, chacun des guides optiques formant un bras de la spirale.

De façon optionnelle également, au moins un guide optique passe successivement par une unité de communication de chacune des interfaces, les unités de communication étant toutes des lecteurs sauf la première qui est un écrivain.

De façon optionnelle également, au moins un guide optique relie un seul écrivain à un seul lecteur.

De façon optionnelle également, le réseau comporte en outre, pour au moins un guide optique, une source optique s'étendant sur le support, cette source optique étant propre à ce guide optique et connectée à une extrémité de début du guide optique.

De façon optionnelle également, le réseau comporte une entrée sur le support destinée à être connectée à une source optique externe au réseau optique cette entrée étant connectée à l'extrémité de début d'au moins un guide optique.

De façon optionnelle également, le réseau comporte deux faisceaux imbriqués l'un dans l'autre.

De façon optionnelle également, les guides optiques d'un même faisceau ne se croisent pas.

Il est également proposé un système de traitement de données, comportant :
- des unités de traitement de données,
- un réseau optique selon l'invention destiné à permettre une communication de données entre les unités de traitement de données.

L'invention sera mieux comprise à l'aide de la description qui va suivre, donnée uniquement à titre d'exemple et faite en se référant aux dessins annexés dans lesquels :
- la figure 1 représente schématiquement la structure générale d'un réseau optique selon l'invention,
- la figure 2 représente schématiquement une interface du réseau optique de la figure 1,
- la figure 3 représente schématiquement une unité de communication de l'interface de la figure 2, connectée à une unité de traitement,
- les figures 4 à 13 représentent schématiquement des réseaux optiques selon différents modes de réalisation de l'invention.

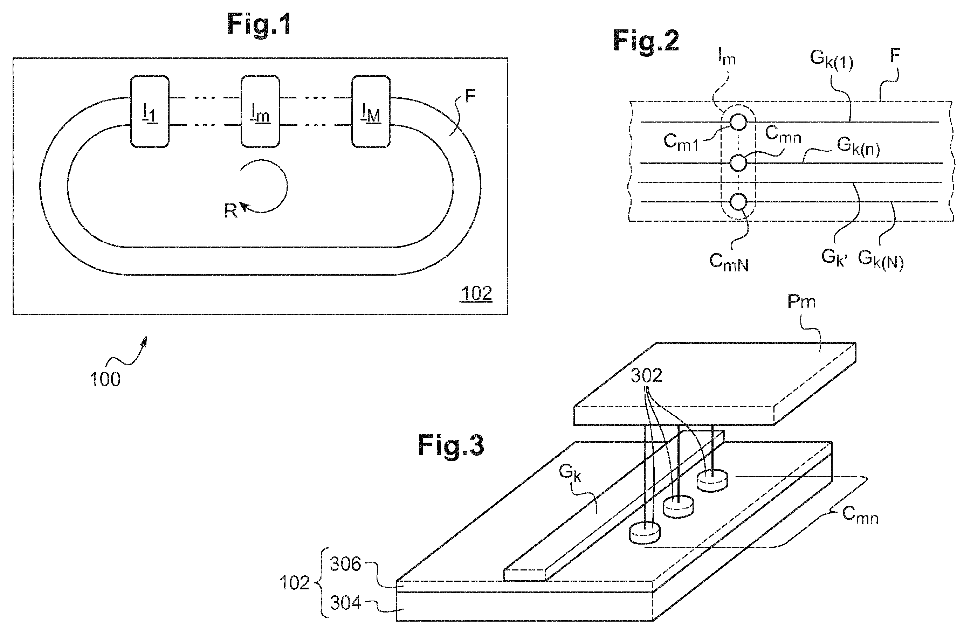

En référence à la figure 1, la structure générale d'un réseau optique 100 selon l'invention va à présent être décrite.

Le réseau 100 est destiné à permettre une communication de données entre des unités de traitement de données (non représentées sur la figure 1) au nombre de M. Le nombre M peut aller de deux à plus de cent, voire plus de mille. Les unités de traitement sont par exemple des circuits intégrés, également appelés « puces ».

À cet effet, le réseau 100 comporte tout d'abord un support 102 en forme de plaque et un faisceau F d'au moins un guide optique s'étendant sur le support 102.

Le réseau 100 comporte en outre, pour chaque unité de traitement, une interface Iₘ (m allant de 1 à M) entre le faisceau F et l'unité de traitement. L'interface Iₘ est destinée à permettre à l'unité de traitement d'échanger des données avec le ou les guides interfacés. Généralement, l'unité de traitement est destinée à venir au-dessus de l'interface et à la recouvrir. Cependant, dans certains cas, l'interface peut s'étendre sur le support 102 au-delà des limites de l'unité de traitement. En variante, les unités de traitement peuvent également être portées par le support 102.

Comme cela est visible sur la figure 1, le faisceau F relie successivement les interfaces Iₘ en boucle fermée selon un certain sens de rotation R destiné à correspondre, comme cela sera expliqué par la suite, au sens de propagation de la lumière dans le ou les guides optiques du faisceau F. Dans l'exemple décrit, le sens de rotation R est le sens de rotation des aiguilles d'une montre.

Chaque guide du faisceau F est un élément allongé destiné à guider de la lumière pour propager de l'information. De préférence, comme cela sera expliqué par la suite, chaque guide est alimenté en lumière de manière que cette dernière se propage dans le sens de rotation R, qui est donc aussi le sens de propagation de l'information. Chaque guide s'étend sur au moins une portion de la boucle fermée formée par le faisceau F. Lorsque le faisceau F regroupe plusieurs guides, les portions sur lesquelles les guides s'étendent se chevauchent pour fermer la boucle. Éventuellement, un ou plusieurs guides peuvent s'étendre sur plus d'un tour de la boucle fermée. Aucun guide ne se croise lui-même ni les autres guides du faisceau F. Les guides du faisceau F s'étendent sensiblement parallèlement les uns aux autres.

Dans la suite de la description, chaque guide sera désigné par la référence générale Gₖ, avec k un indice propre à ce guide. Généralement, chaque guide a une largeur inférieure à 10 µm.

En référence à la figure 2, la structure générale d'une interface Iₘ avec des guides optiques Gₖ(ₙ) (n allant de 1 à N, N étant le nombre de guides optiques interfacés) du faisceau F va à présente être décrite.

L'interface Iₘ comporte, pour chaque guide Gₖ(ₙ) interfacé, une unité de communication Cₘₙ avec le guide Gₖ(ₙ) interfacé. Chaque unité de communication Cₘₙ peut être un lecteur destiné à permettre à l'unité de traitement de lire des données depuis le guide optique Gₖ(ₙ) et/ou un écrivain destiné à permettre à l'unité de traitement de transmettre des données dans le guide Gₖ(ₙ).

Comme cela est visible sur la figure 2, les unités de communication Cₘₙ de l'interface Iₘ sont transversalement rangées par rangs n croissant depuis la périphérie jusqu'à l'intérieur du faisceau F. N est également le nombre d'unités de communication de l'interface Iₘ et peut être différent d'une interface à une autre. Dans l'exemple illustré sur la figure 2, les unités de communication Cₘ₁ à C_{mN} sont en communication avec respectivement les guides Gₖ(₁) à Gₖ(_{N}).

Il sera en outre apprécié que des guides G_{k'} du faisceau F peuvent passer au voisinage d'une interface Iₘ sans être interfacés, c'est-à-dire sans que l'interface Iₘ ne comporte d'unité de communication avec ces guides G_{k'}.

De manière générale, chaque guide optique Gₖ du faisceau F part d'une unité de communication de début et se termine à une unité de communication de fin en passant, le cas échéant, successivement par une ou plusieurs autres unités de communication intermédiaires. Le long du guide, chaque unité de communication intermédiaire et de fin appartient à une interface différente de celle de l'unité de communication précédente.

En référence à la figure 3, une unité de communication Cₘₙ appartenant à l'interface Iₘ d'une unité de traitement Pₘ va à présent être décrite.

L'unité de traitement Pₘ s'étend au-dessus de l'unité de communication Cₘₙ. L'unité de communication Cₘₙ comporte au moins un dispositif de communication 302 connecté à l'unité de traitement Pₘ. Lorsque l'unité de communication Cₘₙ est un écrivain, au moins un dispositif de communication 302 est un dispositif d'écriture destiné à moduler la lumière parcourant le guide optique Gₖ pour transmettre des données. Lorsque l'unité de communication Cₘₙ est un lecteur, au moins un dispositif de communication 302 est un dispositif de lecture sensible à la modulation de la lumière pour lire les données. La présence de plusieurs dispositifs de communication 302 permet de les configurer pour fonctionner sur des canaux de communication différents. Différentes stratégies de multiplexage sont possibles : temporelle, en longueur d'onde, en fréquence, en code, etc.

Par ailleurs, comme cela est visible sur la figure 3, lorsque le réseau optique est réalisé au moyen de la technologie « photonique sur silicium», le support 102 peut comprendre une couche de silicium 304 recouverte d'une couche de dioxyde de silice 306. Dans le cadre de cette technologie, chaque guide optique Gₖ comporte une bande de silicium s'étendant sur la couche de dioxyde de silice 306. Par ailleurs, chaque dispositif de communication 302 comporte par exemple un modulateur en anneau, associé à une photodiode dans le cas de la lecture de données.

Cependant, l'invention n'est pas limitée à la technologie photonique sur silicium, mais peut s'appliquer à toute autre technologie permettant la réalisation de réseaux optiques. Par exemple, un réseau optique selon l'invention peut être obtenu avec la technologie de carte optique, dans laquelle le support est réalisé dans un substrat FR4 (de l'anglais « flame résistant 4 »), et dans laquelle les guides optiques sont en polymères.

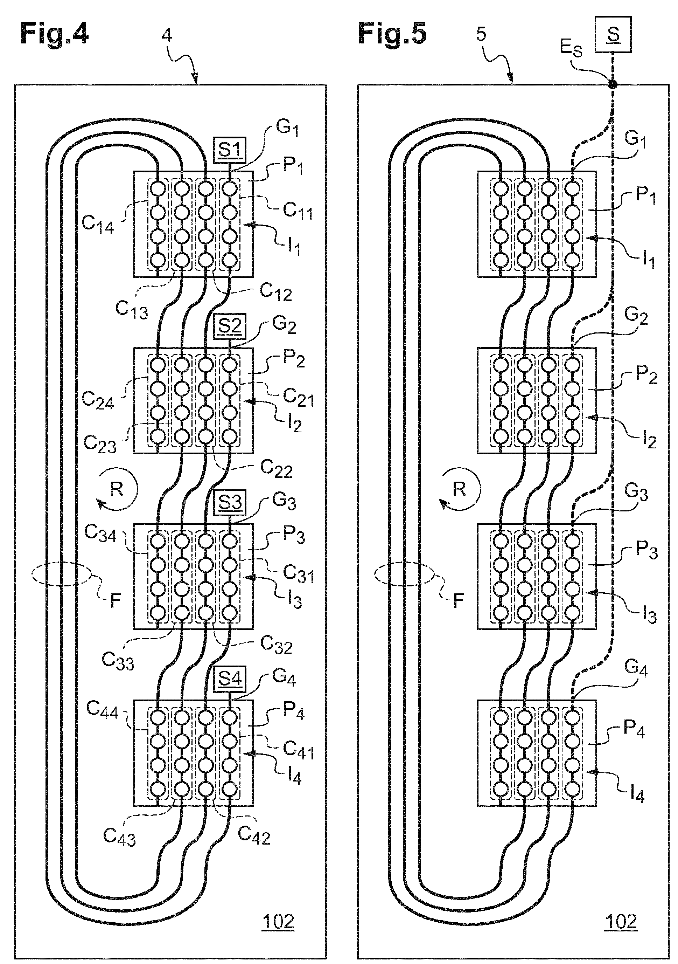

En référence à la figure 4, un réseau optique 4 selon un mode de réalisation de l'invention va à présent être décrit. Le réseau 4 reprend les éléments décrits en référence aux figures 1 à 3.

Le réseau 4 comporte quatre interfaces Iₘ (m=1...4) de respectivement quatre unités de traitement Pₘ. Le réseau 4 comporte en outre un faisceau F de quatre guides optiques Gₖ (k=1...4) reliant successivement les interfaces Iₘ en boucle fermée selon un sens de rotation R.

Chaque interface Iₘ comporte quatre unités de communication Cₘₙ (n=1...4) comportant chacune quatre dispositifs de communication représentés par des cercles.

Comme cela est visible sur la figure 4, chaque guide Gₖ du faisceau F part de la périphérie et arrive à l'intérieur du faisceau F en passant successivement par une unité de communication Cₘₙ de chacune des interfaces Iₘ.

De cette manière, l'unité de communication de fin de chaque guide Gₖ appartient à l'interface la plus éloignée, dans le sens de rotation R, de l'interface de début du guide optique Gₖ. Cette interface la plus éloignée est également l'interface précédente de l'interface de début. Les guides optiques Gₖ commençant par des interfaces de début différentes et finissant également par des interfaces de fin différentes, le faisceau F est en boucle fermée, comme cela est visible sur la figure 4.

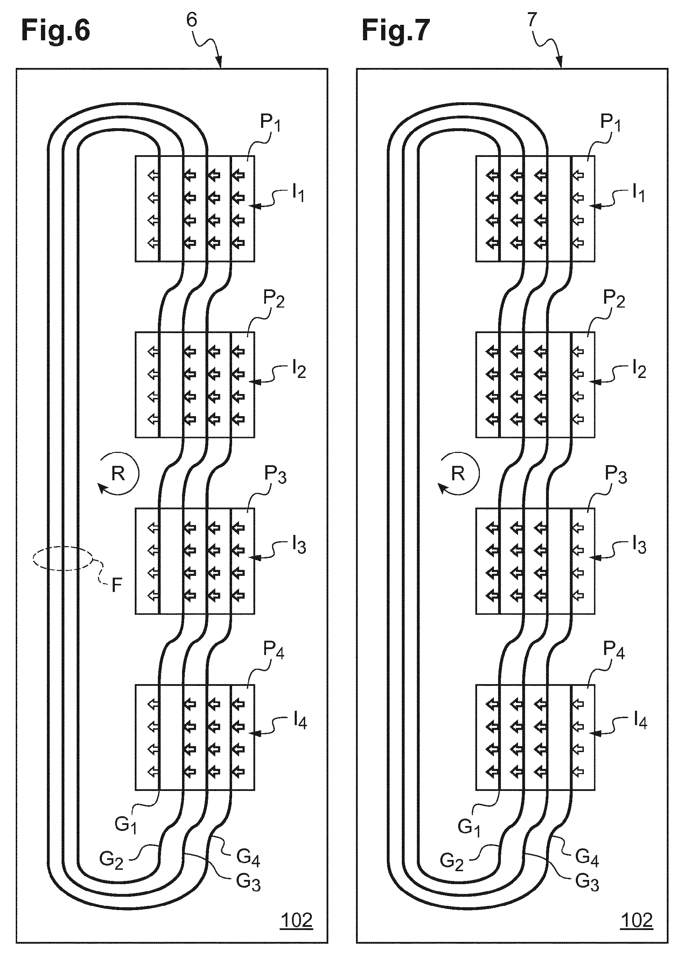

En outre, un guide Gₖ est introduit à chaque interface Iₘ à la périphérie du faisceau F, de manière que ce guide Gₖ parte de l'unité de communication Cₘₙ de l'interface Iₘ la plus périphérique, c'est-à-dire de rang 1. L'introduction de chaque guide Gₖ décale vers l'intérieur les guides introduits à des interfaces précédentes. Ce décalage permet d'obtenir des interfaces Iₘ homogènes, c'est-à-dire qui ont le même nombre d'écrivains et de lecteurs rangés transversalement de la même manière. Cet aspect de l'invention sera par exemple apparent sur les figures 6 et 7 suivantes. En outre, les unités de communication Cₘₙ présentent des rangs augmentant le long du guide optique Gₖ, c'est-à-dire qu'elles sont rangées de plus en plus proches de l'intérieur du faisceau F dans leurs interfaces respectives. Dans l'exemple décrit, les rangs augmentent de un, d'une unité de communication Cₘₙ à la suivante le long du guide optique Gₖ. En outre, l'unité de communication de fin de chaque guide Gₖ est celle la plus à l'intérieur du faisceau F. Ainsi, les guides Gₖ s'étendent sur le support 102 en forme de spirale (comme dans les galaxies d'étoiles en spirale), chaque guide optique formant un bras de la spirale.

Par exemple, le guide optique G1 est introduit à l'interface I₁ et passe par les unités de communication suivantes : C₁₁ (rang 1 de l'interface I₁), C₂₂ (rang 2 de l'interface I₂), C₃₃ (rang 3 de l'interface I₃) et C₄₄ (rang 4 de l'interface I₄).

Ainsi, le faisceau F assure une connexion complète des interfaces Iₘ, c'est-à-dire qu'il est possible depuis chaque interface Iₘ de transmettre des données à n'importe laquelle des autres interfaces.

Par ailleurs, le réseau 4 comporte quatre sources optiques Sₖ, par exemple des lasers, embarquées sur le support 102 du réseau 4. Les sources Sₖ sont respectivement connectées aux extrémités de début des quatre guides Gₖ, c'est-à-dire respectivement au niveau des unités de communication de début. Ainsi, chaque guide Gₖ est connecté à une source optique Sₘ qui lui est propre. Dans un mode de réalisation, chaque source optique Sₘ peut réaliser une modulation directe, et remplace donc l'unité de communication de début de chaque guide Gₖ.

Le fait que les extrémités des guides Gₖ soient en périphérie et à l'intérieur du faisceau F présente comme avantage de faciliter la distribution de puissance optique et/ou les processus de fabrication des interfaces.

En référence à la figure 5, un réseau optique 5 selon un autre mode de réalisation de l'invention va à présent être décrit.

Le réseau 5 est similaire à celui de la figure 4 de sorte que les éléments communs avec la figure 4 ne seront pas décrits à nouveau.

Dans le réseau 5, les sources optiques Sₖ sont remplacées par une unique source optique S. Plus précisément, le réseau 5 comporte une entrée Eₛ sur le support 102 connectée à la source optique S, qui est externe au réseau 5. La source S est par exemple un laser, par exemple destiné à fournir plusieurs longueurs d'onde. L'entrée Eₛ est connectée à toutes les extrémités de début des guides optiques Gₖ par des guides optiques de puissance représentés en pointillés. Cette connexion à la source optique S est grandement facilitée par le fait que les guides optiques Gₖ partent de la périphérie du faisceau F.

Bien que les connexions avec les guides optiques soient représentées en pointillés, il sera apprécié que ces connexions et les guides optiques sont généralement réalisés avec une continuité de matière, l'ensemble formant une arborescence s'étendant sur le support 102. Ainsi, chaque guide optique est un segment de branche de cette arborescence.

En référence à la figure 6, un réseau optique 6 selon un autre mode de réalisation de l'invention va à présent être décrit.

Le réseau 6 est similaire à celui de la figure 4 de sorte que les éléments communs avec la figure 4 ne seront pas décrits à nouveau.

Dans le réseau 6, chaque guide Gₖ est de type MWSR (de l'anglais « Multiple Writer / Single Reader »), c'est-à-dire à écrivains multiples et à lecteur unique. Dans ce cas, toutes les unités de communication Cₘₙ de chaque guide Gₖ sont des écrivains sauf la dernière qui est un lecteur. Cela se traduit en particulier par le fait que chaque dispositif de communication de chaque écrivain Cₘ₁...Cₘ₃ est un dispositif de lecture, représenté sur la figure 6 (et par la suite) par une flèche pointant sur le guide optique Gₖ, et par le fait que chaque dispositif de communication de chaque lecteur Cₘ₄ est un dispositif de lecture, représenté sur la figure 6 (et par la suite) par une flèche s'éloignant du guide optique Gₖ.

Il sera apprécié que la topologie judicieuse des guides Gₖ permet d'obtenir des interfaces Iₘ homogènes, c'est-à-dire ayant toutes un même nombre d'écrivains et de lecteurs, rangés transversalement de la même manière pour toutes les interfaces Iₘ.

En référence à la figure 7, un réseau optique 7 selon un autre mode de réalisation de l'invention va à présent être décrit.

Le réseau 7 est similaire à celui de la figure 4 de sorte que les éléments communs avec la figure 4 ne seront pas décrits à nouveau.

Dans le réseau 7, chaque guide Gₖ est de type SWMR (de l'anglais « Single Writer / Multiple Reader »), c'est-à-dire à écrivain unique et à lecteurs multiples. À cet effet, toutes les unités de communication Cₘₙ de chaque guide Gₖ sont des lecteurs sauf la première qui est un écrivain.

Il sera apprécié que, à nouveau, toutes les interfaces Iₘ sont homogènes.

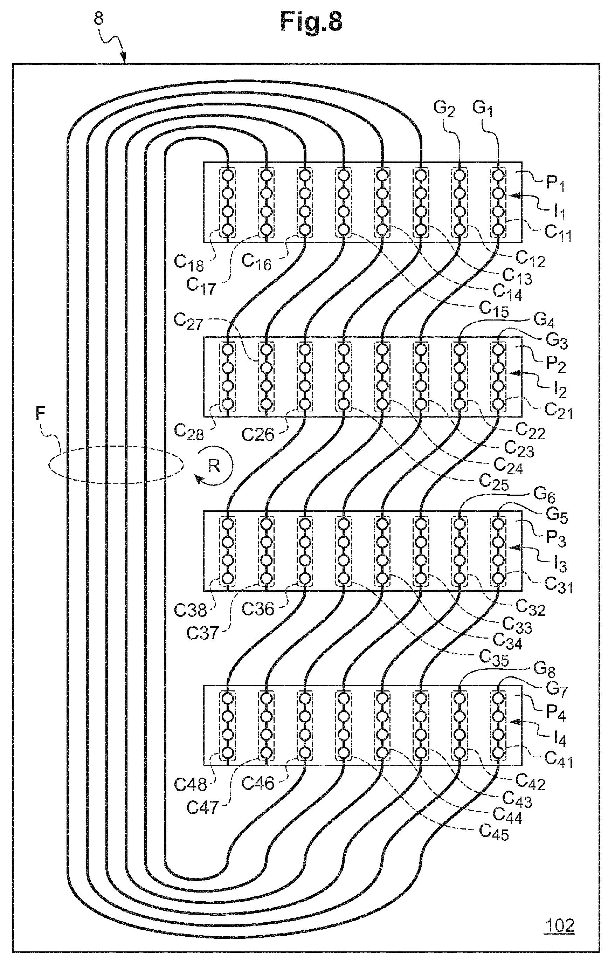

En référence à la figure 8, un réseau optique 8 selon un autre mode de réalisation de l'invention va à présent être décrit.

Le réseau 8 est similaire à celui de la figure 4 de sorte que les éléments communs avec la figure 4 ne seront pas décrits à nouveau.

Dans le réseau 8, les guides Gₖ sont introduits à chaque interface Iₘ par paire, comme cela va être expliqué.

Le réseau 8 comporte quatre interfaces Iₘ (m=1...4) de respectivement quatre unités de traitement Pₘ. Le réseau 8 comporte en outre un faisceau F de huit guides optiques Gₖ (k=1...8) reliant successivement les interfaces Iₘ en boucle fermée selon un sens de rotation R.

Chaque interface Iₘ comporte huit unités de communication Gₘₙ (n=1...8) comportant chacune quatre dispositifs de communication représentés par des cercles.

Comme cela est visible sur la figure 8, chaque guide Gₖ du faisceau F part de la périphérie et arrive à l'intérieur du faisceau F en passant successivement par une unité de communication Cₘₙ de chacune des interfaces Iₘ. De cette manière, la dernière unité de communication de chaque guide optique Gₖ appartient à l'interface la plus éloignée, dans le sens de rotation R, de l'interface de début du guide Gₖ.

En outre, une paire de nouveaux guides Gₖ est introduite à chaque interface Iₘ à la périphérie du faisceau F, de manière que ces deux guides partent respectivement des deux unités de communication Cₘₙ de l'interface Iₘ les plus périphériques, c'est-à-dire de rangs 1 et 2. L'introduction de chaque paire de guides Gₖ décale vers l'intérieur les guides Gₖ introduits à des interfaces précédentes. En outre, les unités de communication Cₘₙ présentent des rangs augmentant le long du guide Gₖ. Dans l'exemple décrit, les rangs augmentent de deux, d'une unité de communication Cₘₙ à la suivante le long du guide Gₖ. En outre, l'unité de communication de fin de chaque guide Gₖ est celle le plus à l'intérieur du faisceau F.

Par exemple, les guides de la paire G₁, G₂ passent respectivement par les unités de communication suivantes : C₁₁, C₁₂ (rangs 1 et 2 de l'interface I₁), C₂₃, C₂₄ (rangs 3 et 4 de l'interface I₂), C₃₅, C₃₆ (rangs 5 et 6 de l'interface I₃) et C₄₇, C₄₈ (rangs 7 et 8 de l'interface I₄).

Le regroupement des guides par paire peut être utile pour séparer des données de différentes natures. Par exemple, un guide de la paire peut être utilisé pour transmettre une requête et l'autre guide de la paire peut être utilisé pour transmettre une réponse à une requête, ce qui permet d'obtenir une architecture régulière de type requête-réponse. Comme cela est visible sur la figure 8, les guides dédiés aux requêtes et les guides dédiés aux réponses alternent transversalement au faisceau F.

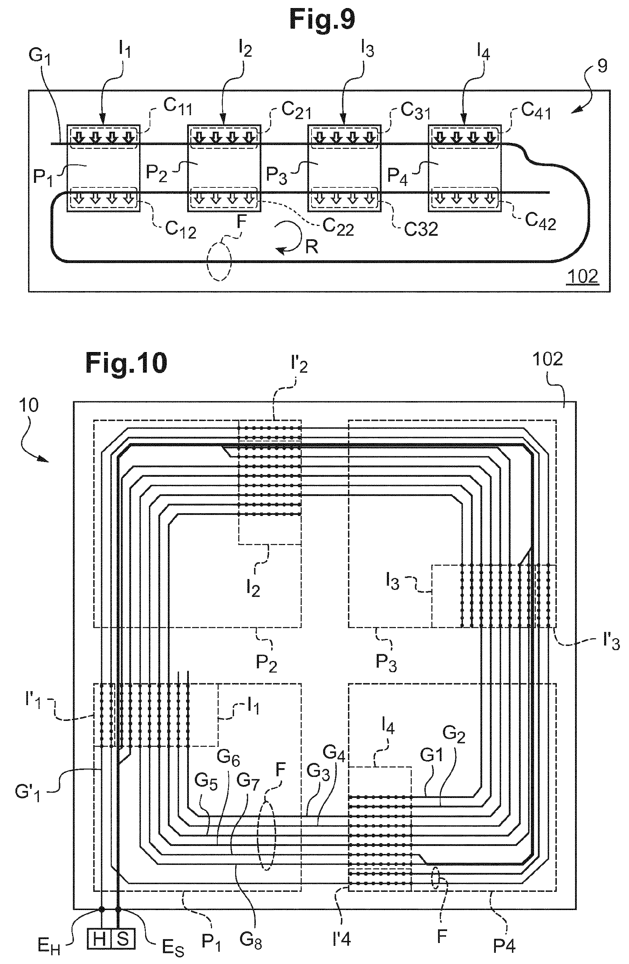

En référence à la figure 9, un réseau optique 9 comprenant un unique guide optique va à présent être décrit. Le réseau 9 reprend les éléments décrits en référence aux figures 1 à 3.

Le réseau 9 comporte quatre interfaces Iₘ (m=1...4) de respectivement quatre unités de traitement Pₘ. Le réseau 9 comporte en outre un faisceau F constitué d'un seul guide optique G₁ reliant successivement les interfaces Iₘ en boucle fermée selon un sens de rotation R.

Dans le réseau 9, le guide G₁ est de type MWMR (de l'anglais « Multiple Writer / Multiple Reader »), c'est-à-dire à écrivains multiples et à lecteurs multiples. À cet effet, chaque interface Iₘ comporte un lecteur Cₘ₂ et un écrivain Cₘ₁ situé dans l'interface Iₘ à la périphérie du lecteur Cₘ₂. Le guide G₁ passe, dans le sens de rotation R, par tous les écrivains Cₘ₁ des interfaces Iₘ, puis revient à la première interface I₁ et passe par tous les lecteurs Cₘ₂ des interfaces Iₘ. En particulier, le guide optique G₁ passe par une unité de communication de rang un (l'unité de communication C₄₁) puis par une unité de communication de rang deux (l'unité de communication C₁₂).

En référence à la figure 10, un réseau optique 10 selon un autre mode de réalisation de l'invention va à présent être décrit.

Le réseau 10 est similaire à celui de la figure 8 de sorte que les éléments communs avec la figure 8 ne seront pas décrits à nouveau.

Dans le réseau 10, chaque unité de communication Cₘₙ comporte huit dispositifs de communication au lieu de quatre pour le réseau 8.

Par ailleurs, le réseau 10 comporte quatre interfaces I'ₘ pour respectivement les quatre unités de traitement Pₘ. Les quatre interfaces I'ₘ sont respectivement situées à la périphérie des quatre interfaces Iₘ et comportent chacune deux unités de communication comportant chacune huit dispositifs de communication représentés par des cercles.

Le réseau 10 comporte en outre un autre faisceau F' entourant le faisceau F et comportant un seul guide optique G'₁ reliant successivement les interfaces I'ₘ en boucle fermée dans le même sens de rotation R que le faisceau F. Le faisceau F' entoure le faisceau F.

Comme cela est visible sur la figure 4, chaque interface I'ₘ comporte deux unités de communication C'ₘ₁, C'ₘ₂ pour communiquer avec le guide G'₁. Ces deux unités de communication C'ₘ₁, C'ₘ₂ sont rangées respectivement à la périphérie et à l'intérieur du faisceau F'. Le guide G'₁ passe, dans le sens de rotation R, par toutes les unités de communication périphériques C'ₘ₁, puis revient à la première interface I'₁ et passe par toutes les unités de communication intérieures C'ₘ₂.

Le réseau 10 comporte en outre une entrée E_{H} sur le support 102 connectée à une source d'horloge H externe au réseau 10. L'entrée E_{H} est connectée à l'extrémité de début du guide G'1.

Par ailleurs, le réseau 10 comporte une entrée Eₛ sur le support 102 connectée à une source optique S externe au réseau 10, par exemple un laser. L'entrée Eₛ est connectée aux extrémités de début des guides Gₖ par des guides optiques de puissance représentés en traits épais.

Il sera apprécié que le réseau 10 ne comporte qu'un seul croisement de guide optique, entre le guide de puissance et le guide G'₁.

Le réseau 10 est un bon exemple de cas où des informations de différentes natures doivent être échangées entre les interfaces (informations d'horloge et informations de données). Dans ce cas, l'invention permet avantageusement d'utiliser un faisceau différent pour chaque type d'information, les différents faisceaux s'étendant les uns autour des autres de manière concentrique, même si cela entraîne quelques croisements entre des guides de différents faisceaux.

Par ailleurs, le fait que le signal d'horloge se propage dans le même sens de rotation R que les données dans les guides Gₖ permet de faciliter la synchronisation des unités de traitement Pₘ.

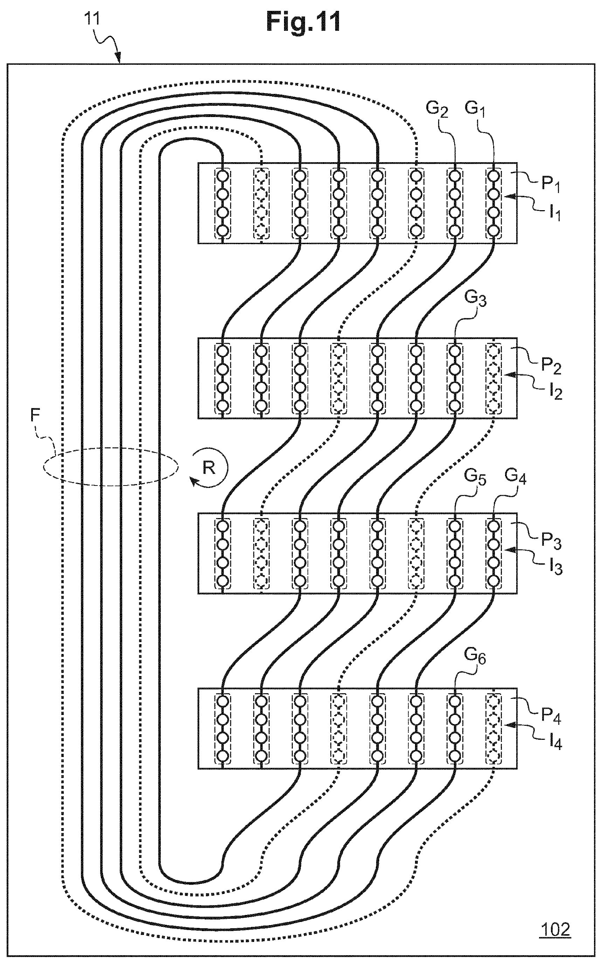

En référence à la figure 11, un réseau optique 11 selon un autre mode de réalisation de l'invention va à présent être décrit.

Le réseau 11 est similaire à celui de la figure 8 de sorte que les éléments communs avec la figure 8 ne seront pas décrits à nouveau.

Comme cela est visible sur la figure 11, le réseau 11 est conçu à partir du réseau 8 de la figure 8. Il suffit en effet de retirer au réseau 8 les guides optiques et les unités de communication indiqués en pointillés sur la figure 11. On peut par ailleurs arriver directement à la topologie illustrée sur la figure 11 en considérant pour chaque interface Iₘ le nombre de guides soit à introduire soit à arrêter en fonction de leur type : SWMR, MWSR, SWSR, MWMR...

Dans le réseau 11 les guides Gₖ sont introduits à chaque interface Iₘ alternativement par paire et seul, comme cela va être expliqué. On notera ainsi que les interfaces impaires et paires sont différentes. En d'autres termes, les interfaces impaires sont toutes identiques et les interfaces paires sont également toutes identiques, mais différentes des interfaces impaires. Le circuit est ainsi réalisé en réutilisant uniquement deux types de structure « layout » (en référence au terme anglais).

Le réseau 11 comporte quatre interfaces Iₘ (m=1...4) de respectivement quatre unités de traitement Pₘ. Le réseau 11 comporte en outre un faisceau F de six guides optiques Gₖ (k=1...6) reliant successivement les interfaces Iₘ en boucle fermée selon un sens de rotation R.

Chaque interface Iₘ comporte six unités de communication Gₘₙ (n=1...6) comportant chacune quatre dispositifs de communication représentés par des cercles.

Comme cela est visible sur la figure 11, chaque guide Gₖ du faisceau F part de la périphérie et arrive à l'intérieur du faisceau F en passant successivement par une unité de communication Cₘₙ de chacune des interfaces Iₘ. De cette manière, la dernière unité de communication de chaque guide Gₖ appartient à l'interface la plus éloignée, dans le sens de rotation R, de l'interface de début du guide Gₖ.

En outre, une paire de guides Gₖ et un guide individuel Gₖ sont alternativement introduits à chaque interface Iₘ à la périphérie du faisceau F, de manière que ce ou ces guides introduits partent respectivement de la ou des unités de communication Cₘₙ les plus périphériques. L'introduction de chaque guide Gₖ décale vers l'intérieur les guides Gₖ introduits à des interfaces précédentes. En outre, les unités de communication Cₘₙ présentent des rangs augmentant le long du guide Gₖ. Dans l'exemple décrit, les rangs augmentent alternativement de un et de deux, d'une unité de communication Cₘₙ à la suivante le long du guide Gₖ. En outre, les unités de communication les plus à l'intérieur du faisceau F sont des unités de communication de fin de guide Gₖ.

Par exemple, les guides optiques de la paire G₁, G₂ passent respectivement par les unités de communication suivantes : C₁₁, C₁₂ (rangs 1 et 2 de l'interface I₁), C₂₂, C₂₃ (rangs 2 et 3 de l'interface I₂), C₃₄, C₃₅ (rangs 4 et 5 de l'interface I₃) et C₄₅, C₄₆ (rangs 5 et 6 de l'interface I₄).

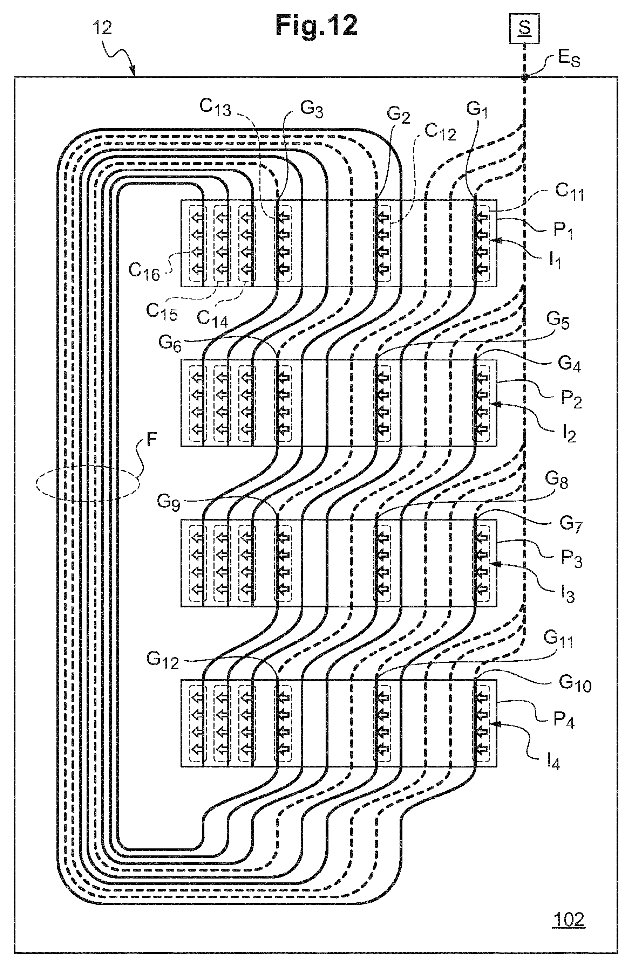

En référence à la figure 12, un réseau optique 12 selon un autre mode de réalisation de l'invention va à présent être décrit. Le réseau 12 reprend les éléments décrits en référence aux figures 1 à 3.

Le réseau 12 comporte quatre interfaces Iₘ (m=1...4) de respectivement quatre unités de traitement Pₘ. Le réseau 12 comporte en outre un faisceau F de douze guides optiques Gₖ (k=1...12) reliant successivement les interfaces Iₘ en boucle fermée selon un sens de rotation R.

Chaque interface Iₘ comporte six unités de communication Cₘₙ (n=1...6) comportant chacune quatre dispositifs de communication représentés par des flèches.

Dans le réseau 12, les guides optiques Gₖ sont de type SWSR (de l'anglais « Single Write / Single Read »), c'est-à-dire à écriture simple et à lecture simple. Ainsi, chaque guide optique Gₖ relie un seul écrivain à un seul lecteur.

M étant le nombre d'interfaces Iₘ, chaque interface Iₘ comporte M-1 lecteurs et M-1 écrivains situés à la périphérie des lecteurs. Par exemple, l'interface I₁ comporte, depuis la périphérie jusqu'à l'intérieur du faisceau F : les écrivains C₁₁, C₁₂, C₁₃ et les lecteurs C₁₄, C₁₅, C₁₆.

En outre, pour chaque interface Iₘ, chaque écrivain de l'interface Iₘ considérée est relié par un guide Gₖ à un lecteur d'une autre interface. Cette autre interface est d'autant plus éloignée dans le sens de rotation R que l'écrivain est périphérique. En outre, le lecteur relié à l'écrivain par le guide Gₖ est d'autant plus périphérique que l'écrivain est périphérique.

Par exemple, l'écrivain C₁₃ est relié au lecteur C₂₂ de l'interface I₂, qui est la plus proche de l'interface I₁ dans le sens de rotation R. L'écrivain C₁₂ est relié au lecteur C₂₂ de l'interface I₂, qui suit l'interface I₁. L'écrivain C₁₁ est relié au lecteur C₄₂ de l'interface I₄, la plus éloignée de l'interface I₁ dans le sens de rotation R.

On remarquera que, dans la topologie illustrée sur la figure 12, trois guides sont introduits à chaque interface, dont un est introduit à la périphérie du faisceau F.

Par ailleurs, le réseau 12 comporte une entrée E_{S} sur le support 102 connectée à une source optique S externe au réseau 12, par exemple un laser. L'entrée Eₛ est connectée à toutes les extrémités de début des guides Gₖ par des guides optiques de puissance représentés en pointillés. Cette connexion à la source optique S se fait facilement pour les guides Gₖ introduits à la périphérie du faisceau F. Pour les autres guides, des guides de puissance en spirale et intercalés entre les guides Gₖ sont prévus. Bien que les unités de communication de chaque interface Iₘ soient représentées plus distantes les unes des autres en présence de guide de puissance intercalé (comme cela est visible par exemple entre les écrivains de chaque interface), dans la réalité, l'espacement minimal entre les guides Gₖ est souvent bien plus petit (entre 1 et 5 µm) que l'espacement minimal entre les unités de communication (typiquement entre 20 et 100 µm lorsque l'unité de traitement Pₘ est un circuit intégré). Ainsi, en pratique, il est possible de resserrer transversalement les unités de communication.

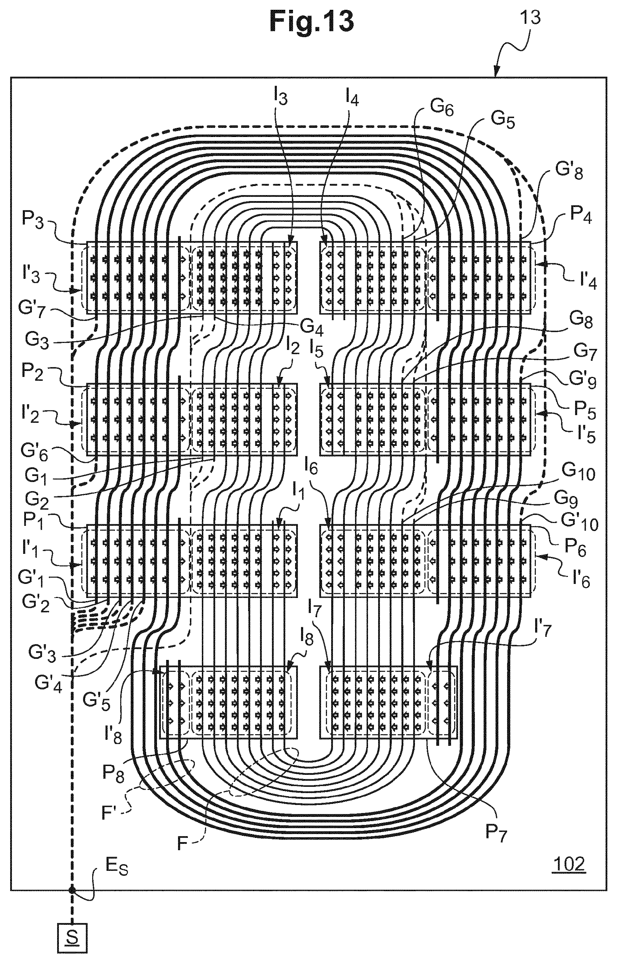

En référence à la figure 13, un réseau optique 13 selon un mode de réalisation de l'invention va à présent être décrit. Le réseau 13 reprend les éléments décrits en référence aux figures 1 à 3.

Le réseau 13 est destiné à être utilisé par huit unités de traitement Pₘ (m=1...8). Chaque unité de traitement Pₘ présente une première interface Iₘ et une seconde interface I'ₘ. Les unités de traitement P₁ à P₆ présentent des interfaces similaires d'un premier type (la paire d'interfaces Iₘ et I'ₘ étant identique d'une unité de traitement à l'autre), tandis que les unités de traitement P₇ et P₈ présentent également des interfaces similaires, mais d'un second type (la paire d'interfaces Iₘ et I'ₘ étant identique d'une unité de traitement à l'autre).

Le réseau 13 comporte en outre deux faisceaux F, F' de respectivement huit guides optiques Gₖ et dix guides optiques G'ₖ. Le faisceau F relie successivement les interfaces Iₘ en boucle fermée selon un sens de rotation R et le faisceau F' entoure le faisceau F et relie successivement les interfaces I'ₘ en boucle fermée dans le même sens de rotation R. Le faisceau F est imbriqué dans le faisceau F' de sorte que les interfaces I'ₘ se trouvent à la périphérie des interfaces Iₘ.

Tous les guides optiques Gₖ, G'ₖ des faisceaux F, F' sont introduits à la périphérie de leur faisceau F, F'.

Plus précisément, pour le faisceau F, les guides sont introduits par paires à la périphérie des interfaces I₂, I₃, I₄, I₅, I₆. En revanche, aucun guide n'est introduit aux interfaces I₇ et I_{8.}

Pour le faisceau F', quatre guides sont introduits à la périphérie de l'interface I'₁, les autres guides étant introduits individuellement à la périphérie des interfaces I'₂, I'₃, I'₄, I'₅, I'₆. En revanche, aucun guide n'est introduit aux interfaces I'₇ et I'₈.

Par ailleurs, le réseau 13 comporte une entrée Eₛ sur le support 102 connectée à une source optique S externe au réseau 13, par exemple un laser. L'entrée Eₛ est connectée à toutes les extrémités de début des guides optiques Gₖ, G'ₖ des deux faisceaux F, F' par des guides optiques de puissance représentés en pointillés.

Il sera apprécié que les guides Gₖ, G'ₖ des deux faisceaux F, F', ne se croisent pas. Les seuls croisements de guides ont lieu entre des guides du faisceau F' et les guides de puissance. En outre, en variante, il est possible de faire serpenter les guides de puissance optique entre les guides optiques Gₖ, G'ₖ pour éviter ces croisements.

Les faisceaux F, F' peuvent être utilisés pour convoyer différentes classes de trafic. On notera que ce découpage en deux faisceaux F, F' est un choix motivé par un souci de différencier différents types/natures de communication entre les éléments du circuit. En outre, il peut être plus simple d'organiser les échanges inter unités de traitement en plusieurs faisceaux quand les interfaces sont en pratique constituées de « sous-interfaces » reliées à des éléments distincts de l'unité de traitement (par exemple, un processeur, une mémoire). La présence de deux faisceaux F et F' reliés chacun à une même unité de traitement respectivement par deux interfaces I et I' permet en pratique de mettre en oeuvre deux types de communication de type MWSR, par exemple des communications de type « requête » allant d'un processeur parmi plusieurs processeurs vers une mémoire donnée et des communications de type « réponse » allant d'une mémoire parmi plusieurs mémoires vers un processeur donné. Plus précisément, les unités de traitement P₁ à P₆ comprennent par exemple chacune un processeur et une mémoire susceptibles respectivement de s'adresser (en envoyant une requête ou en retournant une donnée lue en mémoire) à une des autres unités de traitement respectivement par les écrivains de son interface I'₁ à I'₆ associée et les écrivains de son interface I₁ à I₆ associée. Les unités de traitement P₇ à P₈ comprennent par exemple chacune seulement une mémoire susceptible de recevoir une demande de lecture par les lecteurs de son interface I'₇ ou I'₈ associée et susceptible de retourner une donnée lue en mémoire à destination d'une autre unité de traitement par les écrivains de son interface I₇ ou I₈ associée.

Chaque guide d'onde est dans cet exemple de type MWSR. Dans la mesure où en pratique, chaque mémoire et chaque processeur ne peut généralement traiter qu'une seule requête de lecture ou d'opérations à la fois, le partage du guide optique n'est en pratique pas réellement un facteur limitant de la vitesse de fonctionnement du circuit et la bande passante à travers le réseau de communication optique peut ainsi avantageusement être réduite, ce qui permet de simplifier la conception du circuit. Ainsi, on choisira de préférence de relier à un même guide optique des écrivains d'interfaces différentes associées à des unités de traitement émettrices dont les communications à destination d'une unité de traitement réceptrice ont vocation à être sérialisées temporellement par le système de commande générale du circuit électronique incluant les unités de traitement. De même, on choisira de préférence, de relier à un même guide optique des lecteurs d'interfaces différentes associées à des unités de traitement réceptrices dont les communications en provenance d'une unité de traitement émettrice ont vocation à être sérialisées temporellement par le système de commande générale du circuit électronique.

On notera qu'en figure 13 on a identifié deux faisceaux F et F', et non pas un seul faisceau. Comme pour les exemples précédemment décrits, chaque faisceau regroupe les guides d'ondes parcourant, traversant, un ensemble d'interfaces pour lesquelles les émetteurs sont tous regroupés et placés en périphérie du faisceau et/ou les émetteurs sont tous regroupés et placés à l'intérieur du faisceau. Ce regroupement des émetteurs d'un côté et des récepteurs de l'autre, avec un ensemble de guides d'ondes tournant dans le même sens de rotation, permet en pratique de maximiser la compacité du réseau optique. On notera toutefois, que les émetteurs auraient pu être placés côté intérieur et les récepteurs du côté périphérique du faisceau, avec des sources laser reliées aux guides d'ondes par l'intérieur du faisceau.

On notera en outre, que les faisceaux F et F' pourraient tourner dans des sens opposés.

En outre, on notera comme indiqué ci-dessus que le sens de rotation considéré correspond au sens de propagation de l'information. Dans le cas où le réseau optique serait constitué de guides optiques susceptibles d'être parcourus par des ondes lumineuses se propageant dans des sens opposés, un même guide optique pourrait éventuellement faire partie de deux faisceaux distincts, présentant des sens de rotation (de l'information) opposés. On notera que dans les exemples présentés, les guides optiques sont principalement de type MWSR ou SWMR. Néanmoins, on pourrait avoir dans le faisceau tout ou partie de guides de type MWMR, bien que leur présence ne soit en général pas optimale car cela limite souvent la bande passante générale du circuit électronique. A contrario, on pourrait également avoir dans le faisceau tout ou partie de guides de type SWSR, bien que cela ne soit pas privilégié pour des raisons d'encombrement. Ainsi, on obtiendra en pratique souvent un compromis optimal entre la bande passante et l'encombrement en utilisant des guides d'ondes de type MWSR ou SWMR, en organisant le réseau à partir de l'analyse du circuit, en recherchant les communications inter unités de traitement qui conduisent nécessairement à une sérialisation des requêtes reçues par l'unité de traitement réceptrice.

Il sera apprécié que chacun des réseaux optiques décrits précédemment est destiné à être intégré dans un système de traitement de données comportant, en plus du réseau lui-même, le cas échéant : les unités de traitement, la source d'horloge et la source optique externe.

Par ailleurs, dans les figures annexées, le placement des différentes interfaces est donné de manière théorique, et ne représente pas obligatoirement leur placement physique.

Il apparaît clairement qu'un réseau optique tel que celui décrit précédemment permet d'interconnecter des unités de traitement de manière simple et efficace. En particulier, le nombre de guides reste modéré et le nombre de croisements entre guides reste faible. En outre, un réseau optique selon l'invention peut être facilement connecté à une ou plusieurs sources optiques, en particulier à une ou plusieurs sources optiques externes au réseau.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, l'invention ne nécessite aucune présupposition quant aux interfaces utilisées pour connecter les guides.

En outre, en variante, les guides peuvent se croiser et se décroiser entre les interfaces. Néanmoins, cette possibilité n'est en général pas souhaitable pour ne pas dégrader la qualité des faisceaux et des informations véhiculées par ces faisceaux à travers les guides d'ondes.

Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Réseau optique (4 ; 5 ; 6 ; 7 ; 8 ; 10 ; 11 ; 12 ; 13) destiné à permettre une communication de données entre des unités (P₁...P₈) de traitement de données, comportant :
- un support (102),
- au moins un faisceau (F, F') de plusieurs guides optiques (G₁...G₁₂, G'₁...G'₁₀) s'étendant sur le support (102),
- pour chaque faisceau (F, F'), des interfaces (I₁...I₈, I'₁...I'₈) entre le faisceau (F, F') et respectivement les unités de traitement (P₁...P₈), chaque interface (I₁...I₈, I'₁,...I'₈) comportant une ou plusieurs unités de communication (C₁₁...C₄₈) avec respectivement un ou plusieurs guides optiques (G₁...G₁₂, G'₁...G'₁₀) du faisceau (F, F') pour permettre à l'unité de traitement (P₁...P₈) respective d'échanger des données avec ce ou ces guides optiques (G₁...G₁₂, G'₁...G'₁₀), chaque unité de communication (C₁₁...C₄₈) pouvant être un lecteur et/ou un écrivain,
dans lequel le faisceau (F, F') relie successivement les interfaces (I₁ ... I₈, I'₁...I'₈) en boucle fermée orientée dans un certain sens de rotation de l'information (R),
et dans lequel les unités de communication (C₁₁...C₄₈) de chaque interface (I₁...I₈, I'₁...I'₈) sont transversalement rangées par rangs croissant depuis la périphérie jusqu'à l'intérieur du faisceau (F, F'),
**caractérisé en ce que** des premier et deuxième guides optiques (G₁...G₁₂, G'₁...G'₁₀) partent d'interfaces différentes ou se terminent à des interfaces différentes,
**en ce que** le premier guide optique (G₁...G₁₂, G'₁...G'₁₀) relie deux unités de communication (C₁₁...C₄₈) toutes les deux lecteurs et/ou écrivains et de rangs différents dans des première et deuxième interfaces (I₁...I₈, I'₁...I'₈) respectives,
et **en ce que** le deuxième guide optique (G₁...G₁₂, G'₁...G'₁₀) passe par une unité de communication (C₁₁...C₄₈) de la deuxième interface (I₁ ... I₈, I'₁...I'₈) de rang inférieur à celui de l'unité de communication (C₁₁...C₄₈) de cette deuxième interface (I₁...I₈, I'₁...I'₈) par laquelle passe le premier guide optique (G₁...G₁₂, G'₁...G₁₀).

2. Réseau optique (6 ; 7 ; 12) selon la revendication 1, dans lequel, pour chaque faisceau (F), au moins deux interfaces (I₁...I₄) comportent un même nombre d'écrivains et de lecteurs, transversalement rangés de la même manière, et dans lequel les écrivains sont tous placés à la périphérie du faisceau et les lecteurs placés à l'intérieur du faisceau, ou inversement.

3. Réseau optique (4 ; 5 ; 6 ; 7 ; 8 ; 10 ; 11 ; 13) selon la revendication 1 ou 2, dans lequel chacun desdits plusieurs guides optiques (G₁...G₁₂, G'₁...G'₁₀) du faisceau (F, F') part ou finit :
- soit de/à l'unité de communication (C₁₁...C₄₁) la plus périphérique d'une des interfaces (I₁...I₈, I'₁,...I'₈) avec le faisceau (F, F'),
- soit de/à une autre unité de communication (C₁₂...C₄₂) de l'interface (I₁...I₈, I'₁...I'₈), à la périphérie de laquelle ne se trouvent que des unités de communication (C₁₁...C₄₁) d'où/où respectivement d'autres guides optiques partent ou finissent.

4. Réseau optique (4 ; 5 ; 6 ; 7 ; 8 ; 10 ; 11 ; 12 ; 13) selon l'une quelconque des revendications 1 à 3, dans lequel chacun d'au moins un guide optique (G₁...G₁₂, G'₁...G'₁₀) relie, dans le sens de rotation de l'information (R), des unités de communication (C₁₁...C₄₈) rangées de plus en plus proches de l'intérieur du faisceau (F, F') dans leurs interfaces respectives, ou rangées de plus en plus proches de la périphérie du faisceau (F, F') dans leurs interfaces respectives.

5. Réseau optique (4 ; 5 ; 6 ; 7 ; 8 ; 10 ; 11 ; 12 ; 13) selon l'une quelconque des revendications 1 à 4, dans lequel chacun desdits plusieurs guides optiques (G₁...G₁₂, G'₁...G'₁₀) se termine ou part :
- soit à/de l'unité de communication (C₁₈...C₄₈) la plus à l'intérieur d'une des interfaces (I₁...I₈, I'₁...I'₈),
- soit à/de une autre unité de communication (C₁₇...C₄₇) de l'interface (I₁...I₈, I'₁...I'₈), à l'intérieur de laquelle ne se trouvent que des unités de communication (C₁₈...C₄₈) où/d'où respectivement d'autres guides optiques se terminent ou partent.

6. Réseau optique (4 ; 5 ; 6 ; 7 ; 8 ; 10 ; 11 ; 12 ; 13) selon l'une quelconque des revendications 1 à 5, dans lequel les guides optiques (G₁...G₁₂, G'₁...G'₁₀) de chaque faisceau (F, F') s'étendent sur le support (102) en forme de spirale, chacun des guides optiques (G₁...G₁₂, G'₁...G'₁₀) formant un bras de la spirale.

7. Réseau optique (6) selon l'une quelconque des revendications 1 à 6, dans lequel au moins un guide optique (G₁...G₄) passe successivement par une unité de communication de chacune des interfaces (I₁...I₄), les unités de communication étant toutes des écrivains sauf la dernière qui est un lecteur.

8. Réseau optique (7) selon l'une quelconque des revendications 1 à 6, dans lequel au moins un guide optique (G₁...G₄) passe successivement par une unité de communication de chacune des interfaces (I₁...I₄), les unités de communication étant toutes des lecteurs sauf la première qui est un écrivain.

9. Réseau optique (12) selon l'une quelconque des revendications 1 à 8, dans lequel au moins un guide optique (G₁...G₁₂ relie un seul écrivain à un seul lecteur.

10. Réseau optique (4) selon l'une quelconque des revendications 1 à 9, comportant en outre, pour au moins un guide optique (G₁...G₄), une source optique (S₁...S₄) s'étendant sur le support (102), cette source optique (S₁...S₄) étant propre à ce guide optique (G₁...G₄) et connectée à une extrémité de début du guide optique (G₁...G₄).

11. Réseau optique (5, 10, 12, 13) selon l'une quelconque des revendications 1 à 9, comportant une entrée (E_{S}) sur le support (102) destinée à être connectée à une source optique (S) externe au réseau optique (5, 10, 12, 13), cette entrée (Es) étant connectée à l'extrémité de début d'au moins un guide optique (G₁...G₁₂, G'₁...G'₁₀).

12. Réseau optique (10) selon l'une quelconque des revendications 1 à 11, comportant deux faisceaux (F, F') imbriqués l'un dans l'autre.

13. Réseau optique (4 ; 5 ; 6 ; 7 ; 8 ; 10 ; 11 ; 12 ; 13) selon l'une quelconque des revendications 1 à 12, dans lequel les guides optiques (G₁...G₁₂, G'₁...G'₁₀) d'un même faisceau (F, F') ne se croisent pas.

14. Système de traitement de données, comportant :
- des unités (P₁...P₁₀) de traitement de données,
- un réseau optique (4 ; 5 ; 6 ; 7 ; 8 ; 10 ; 11 ; 12 ; 13) selon l'une quelconque des revendications 1 à 13, destiné à permettre une communication de données entre les unités de traitement de données (P₁...P₁₀).

## Patentansprüche

1. Optisches Netz (4; 5; 6; 7; 8; 10; 11; 12; 13), das dafür bestimmt ist, eine Datenkommunikation zwischen Datenverarbeitungseinheiten (P₁...P₈) zu ermöglichen, umfassend:
- einen Träger (102),
- mindestens ein Bündel (F, F') mehrerer Lichtwellenleiter (G₁...G₁₂, G'₁...G'₁₀), die sich auf dem Träger (102) erstrecken,
- für jedes Bündel (F, F') Schnittstellen (I₁... I₈, I'₁...I'₈) zwischen dem Bündel (F, F') und jeweils den Verarbeitungseinheiten (P₁...P₈), wobei jede Schnittstelle (I₁...I₈, I'₁...I'₈) eine oder mehrere Einheiten (C₁₁...C₄₈) zur Kommunikation mit jeweils einem oder mehreren der Lichtwellenleiter (G₁...G₁₂ G'₁...G'₁₀) des Bündels (F, F') umfasst, um der jeweiligen Verarbeitungseinheit (P₁...P₈) zu ermöglichen, Daten mit diesem oder diesen Lichtwellenleitern (G₁...G₁₂, G'₁...G'₁₀) auszutauschen, wobei jede Kommunikationseinheit (C₁₁...C₄₈) eine Lese- und/oder eine Schreibeinrichtung sein kann,
wobei das Bündel (F, F') die Schnittstellen (I₁...I₈, I'₁...I'₈) nacheinander in einer geschlossenen Schleife, die in einer bestimmten Richtung der Informationsrotation (R) orientiert ist, verbindet,
und wobei die Kommunikationseinheiten (C₁₁...C₄₈) jeder Schnittstelle (I₁...I₈, I'₁... I'₈) in Querrichtung dem Rang nach angeordnet sind, der vom Außenrand zum Inneren des Bündels (F, F') zunimmt,
**dadurch gekennzeichnet, dass** ein erster und ein zweiter Lichtwellenleiter (G₁...G₁₂, G'₁...G'₁₀) von verschiedenen Schnittstellen ausgehen oder an verschiedenen Schnittstellen enden,
dadurch, dass der erste Lichtwellenleiter (G₁...G₁₂, G'₁...G'₁₀) zwei Kommunikationseinheiten (C₁₁...C₄₈), alle beide, Leseund/oder Schreibeinrichtungen, und unterschiedlichen Rangs in der ersten bzw. zweiten Schnittstelle (I₁...I₈, I'1...I'₈) miteinander verbindet,
und dadurch, dass der zweite Lichtwellenleiter (G₁...G₁₂, G'₁...G'₁₀) durch eine Kommunikationseinheit (C₁₁...C₄₀) der zweiten Schnittstelle (I₁...I8, I'₁...I'₈) hindurchgeht, die von niedrigerem Rang als die Kommunikationseinheit (C₁₁...C₄₈) dieser zweiten Schnittstelle (I₁...I₈, I'₁...I'₈) ist, durch welche der erste Lichtwellenleiter (G₁...G₁₂, G'₁...G'₁₀) hindurchgeht.

2. Optisches Netz (6; 7; 12) nach Anspruch 1, wobei bei jedem Bündel (F) mindestens zwei Schnittstellen (I₁...I₄) eine gleiche Anzahl Schreibeinrichtungen und Leseeinrichtungen umfassen, die in Querrichtung auf gleiche Weise angeordnet sind, und wobei die Schreibeinrichtungen alle am Außenrand des Bündels platziert sind und die Leseeinrichtungen im Inneren des Bündels platziert sind oder umgekehrt.

3. Optisches Netz (4; 5; 6; 7; 8; 10; 11; 13) nach Anspruch 1 oder 2, wobei jeder der mehreren Lichtwellenleiter (G₁...G₁₂, G'₁...G'₁₀) des Bündels (F, F') ausgeht oder endet:
- entweder von/an der am weitesten außen liegenden Kommunikationseinheit (C₁₁...C₄₁) einer der Schnittstellen (I₁...I₈, I'₁...I'₈) mit dem Bündel (F, F'),
- oder von/an einer anderen Kommunikationseinheit (C₁₂...C₄₂) der Schnittstelle (I₁...I₈, I'₁...I'₈), an deren Außenrand sich nur Kommunikationseinheiten (C₁₁...C₄₁) befinden, von/an denen jeweils andere Lichtwellenleiter ausgehen oder enden.

4. Optisches Netz (4; 5; 6; 7; 8; 10; 11; 12; 13) nach einem der Ansprüche 1 bis 3, wobei jeder der Lichtwellenleiter (G₁...G₁₂, G'₁...G'₁₀) Kommunikationseinheiten (C₁₁... C₄₀), die immer weiter im Inneren des Bündels (F, F') in ihren jeweiligen Schnittstellen angeordnet sind oder immer näher am Außenrand des Bündels (F, F') in ihren jeweiligen Schnittstellen angeordnet sind, in der Richtung der Informationsrotation (R) miteinander verbindet.

5. Optisches Netz (4; 5; 6; 7; 8; 10; 11; 12; 13) nach einem der Ansprüche 1 bis 4, wobei jeder der mehreren Lichtwellenleiter (G₁...G₁₂, G'₁...G'₁₀) endet oder ausgeht :
- entweder an/von der am weitesten innen liegenden Kommunikationseinheit (C₁₈...C₄₈) einer der Schnittstellen (I₁...I8, I'₁...I'₈),
- oder an/von einer anderen Kommunikationseinheit (C₁₇...C₄₇) der Schnittstelle (I₁...I₈, I'₁...I'₈), in deren Innerem sich nur Kommunikationseinheiten (C₁₈...C₄₈) befinden, an/von denen jeweils andere Lichtwellenleiter enden oder ausgehen.

6. Optisches Netz (4; 5; 6; 7; 8; 10; 11; 12; 13) nach einem der Ansprüche 1 bis 5, wobei die Lichtwellenleiter (G₁...G₁₂, G'₁...G'₁₀) jedes Bündels (F, F') auf dem Träger (102) in Spiralform verlaufen, wobei jeder der Lichtwellenleiter (G₁...G₁₂, G'₁...G'₁₀) einen Spiralarm bildet.

7. Optisches Netz (6) nach einem der Ansprüche 1 bis 6, wobei mindestens ein Lichtwellenleiter (G₁...G₄) nacheinander durch eine Kommunikationseinheit jeder der Schnittstellen (I₁...I₄) hindurchgeht, wobei die Kommunikationseinheiten alle Schreibeinrichtungen sind, bis auf die letzte, die eine Leseeinrichtung ist.

8. Optisches Netz (7) nach einem der Ansprüche 1 bis 6, wobei mindestens ein Lichtwellenleiter (G₁...G₄) nacheinander durch eine Kommunikationseinheit jeder der Schnittstellen (I₁...I₄) hindurchgeht, wobei die Kommunikationseinheiten alle Leseeinrichtungen sind, bis auf die erste, die eine Schreibeinrichtung ist.

9. Optisches Netz (12) nach einem der Ansprüche 1 bis 8, wobei mindestens ein Lichtwellenleiter (G₁...G₁₂) eine einzige Schreibeinrichtung mit einer einzigen Leseeinrichtung verbindet.

10. Optisches Netz (4) nach einem der Ansprüche 1 bis 9, außerdem umfassend: für mindestens einen Lichtwellenleiter (G₁...G₄) eine Lichtquelle (S₁...S₄), die sich auf dem Träger (102) erstreckt, wobei diese Lichtquelle (S₁...S₄) für diesen Lichtwellenleiter (G₁...G₄) spezifisch ist und mit einem Startende des Lichtwellenleiters (G₁...G₄) verbunden ist.

11. Optisches Netz (5, 10, 12, 13) nach einem der Ansprüche 1 bis 9, das auf dem Träger (102) einen Eingang (Es) umfasst, der dafür bestimmt ist, an eine Lichtquelle (S) außerhalb des optischen Netzes (5, 10, 12, 13) gekoppelt zu werden, wobei dieser Eingang (Es) an das Startende mindestens eines Lichtwellenleiters (G₁...G₁₂, G'₁...G'₁₀) gekoppelt ist.

12. Optisches Netz (10) nach einem der Ansprüche 1 bis 11, das zwei Bündel (F, F') umfasst, die ineinander verschachtelt sind.

13. Optisches Netz (4; 5; 6; 7; 8; 10; 11; 12; 13) nach einem der Ansprüche 1 bis 12, wobei sich die Lichtwellenleiter (G₁...G₁₂, G'₁...G'₁₀) ein und desselben Bündels (F, F') nicht kreuzen.

14. Datenverarbeitungssystem, umfassend:
- Datenverarbeitungseinheiten (P₁...P₁₀),
- ein optisches Netz (4; 5; 6; 7; 8; 10; 11; 12; 13) nach einem der Ansprüche 1 bis 13, das dafür bestimmt ist, eine Datenkommunikation zwischen den Datenverarbeitungseinheiten (P₁...P₁₀) zu ermöglichen.

## Claims

1. An optical network (4; 5; 6; 7; 8; 10; 11; 12; 13) intended to enable communication of data between data processing units (P₁...P₈), comprising:
- a medium (102),
- at least one beam (F, F') of several optical waveguides (G₁...G₁₂, G'₁...G'₁₀) extending over the medium (102),
- for each beam (F, F'), interfaces (I₁...I₈, I'₁...I'₈) between the beam (F, F') and the processing units (P₁...P₈) respectively, each interface (I₁...I₈, I'₁...I'₈) comprising one or more communication units (C₁₁...C₄₈) with, respectively, one or more optical waveguides (G₁...G₁₂, G'₁...G'₁₀) of the beam (F, F') so as to enable the respective processing unit (P₁...P₈) to exchange data with said optical waveguide(s) (G₁...G₁₂, G'₁...G'₁₀), each communication unit (C₁₁...C₄₈) being capable of being a reader and/or a writer,
wherein the beam (F, F') successively links the interfaces (I₁...I₈, I'₁...I'₈) in a closed loop oriented in a certain direction of rotation (R),
and wherein the communication units (C₁₁...C₄₈) of each interface (I₁...I₈, I'₁...I'₈) are transversely arranged in ranks increasing from the periphery to the interior of the beam (F, F'),
**characterized in that** first and second optical waveguides (G₁...G₁₂, G'₁...G'₁₀) start from different interfaces or end at different interfaces,
**in that** the first optical waveguide (G₁...G₁₂, G'₁...G'₁₀) links two communication units (C₁₁...C₄₈) both readers and/or writers and of different and increasing ranks in respective first and second interfaces (I₁...I₈, I'₁...I'₈),
and **in that** the second optical waveguide (G₁...G₁₂, G'₁...G'₁₀) passes through a communication unit (C₁₁...C₄₈) of the second interface (I₁...I₈, I'₁...I'₈) of lower rank than that of the communication unit (C₁₁...C₄₈) of this second interface (I₁...I₈, I'₁...I'₈) through which the first optical waveguide (G₁...G₁₂, G'₁...G'₁₀) passes.

2. The optical network (6; 7; 12) according to claim 1, wherein, for each beam (F), at least two interfaces (I₁...I₄) comprise the same number of writers and readers, transversely arranged in the same manner, and wherein the writers are all placed at the periphery of the beam and the readers are placed at the interior of the beam, or the reverse.

3. The optical network (4; 5; 6; 7; 8; 10; 11; 13) according to claim 1 or 2, wherein each of said several optical waveguides (G₁...G₁₂, G,₁...G,₁₀) of the beam (F, F') starts or ends:
- either from/at the most peripheral communication unit (C₁₁...C₄₁) of one of the interfaces (I₁...I₈, I'₁...I'₈) with the beam (F, F'),
- or from/at another communication unit (C₁₂...C₄₂) of the interface (I₁...I₈, I'₁...I'₈), at the periphery of which are only communication units (C₁₁...C₄₁) from/at which, respectively, other optical waveguides start or end.

4. The optical network (4; 5; 6; 7; 8; 10; 11; 12; 13) according to any one of claims 1 to 3, wherein each of at least one optical waveguide (G₁...G₁₂, G'₁...G'₁₀) links, in the direction of rotation of information (R), communication units (C₁₁...C₄₈) arranged increasingly close to the interior of the beam (F, F') in their respective interfaces, or arranged increasingly close to the periphery of the beam (F, F') in their respective interfaces.

5. The optical network (4; 5; 6; 7; 8; 10; 11; 12; 13) according to any one of claims 1 to 4, wherein each of said several optical waveguides (G₁...G₁₂, G'₁...G'₁₀) ends or starts:
- either at/from the interior-most communication unit (C₁₈...C₄₈) of one of the interfaces (I₁...I₈, I'₁...I'₈),
- or at/from another communication unit (C₁₇...C₄₇) of the interface (I₁...I₈, I'₁...I'₈), at the interior of which are only communication units (C₁₈...C₄₈) where, respectively, other optical waveguides end or start.

6. The optical network (4; 5; 6; 7; 8; 10; 11; 12; 13) according to any one of claims 1 to 5, wherein the optical waveguides (G₁...G₁₂, G'₁...G'₁₀) of each beam (F, F') extend over the medium (102) in the form of a spiral, each of the optical waveguides (G₁...G₁₂, G'₁...G'₁₀) forming an arm of the spiral.

7. The optical network (6) according to any one of claims 1 to 6, wherein at least one optical waveguide (G₁...G₄) passes successively through a communication unit of each of the interfaces (I₁...I₄), the communication units all being writers except for the last which is a reader.

8. The optical network (7) according to any one of claims 1 to 6, wherein at least one optical waveguide (G₁...G₄) passes successively through a communication unit of each of the interfaces (I₁...I₄), the communication units all being readers except for the first which is a writer.

9. The optical network (12) according to any one of claims 1 to 8, wherein at least one optical waveguide (G₁...G₁₂) links a single writer to a single reader.

10. The optical network (4) according to any one of claims 1 to 9, further comprising, for at least one optical waveguide (G₁...G₄), an optical source (S₁...S₄) extending over the medium (102), said optical source (S₁...S₄) being specific to said optical waveguide (G₁...G₄) and linked to a starting end of the optical waveguide (G₁...G₄).

11. The optical network (5, 10, 12, 13) according to any one of claims 1 to 9, comprising an input (E_{S}) on the medium (102) intended to be linked to an optical source (S) outside the optical network (5, 10, 12, 13), said input (E_{S}) being linked to the starting end of at least one optical waveguide (G₁...G₁₂, G'₁...G'₁₀).

12. The optical network (10) according to any one of claims 1 to 11, comprising two beams (F, F') nested one in the other.

13. The optical network (4; 5; 6; 7; 8; 10; 11; 12; 13) according to any one of claims 1 to 12, wherein the optical waveguides (G₁...G₁₂, G'₁...G'₁₀) of the same beam (F, F') do not cross.

14. A system for data processing, comprising:
- data processing units (P₁...P₁₀),
- an optical network (4; 5; 6; 7; 8; 10; 11; 12; 13) according to any one of claims 1 to 13, intended to enable communication of data between the data processing units (P₁...P₁₀).
